# EUROPEAN PATENT APPLICATION

(11) **EP 2 028 833 A1**
(43) Date of publication of application: **25.02.2009**
(21) Application number: 08158165.4
(22) Date of filing: 12.06.2008
(51) Int. Cl.: H04M 3/56, H04L 29/06

(54) **Communication control system, call control server and communication control method**

(30) Priority: 22.08.2007 JP 2007216450
(71) Applicant: Fujitsu Ltd., Kawasaki-shi, Kanagawa 211-8588 (JP)
(72) Inventor: Iwakawa, Akinori c/o FUJITSU LIMITED, Kawasaki-shi, Kanagawa 211-8588 (JP); Okuyama, Satoshi c/o FUJITSU LIMITED, Kawasaki-shi, Kanagawa 211-8588 (JP)
(74) Representative: Holtby, Christopher Lawrence

(57) **Abstract**

A call control server establishes a connection between a first terminal agent and a second terminal agent, as an existing call. When a first real terminal device included in a first terminal group has accepted a transfer request, the call control server transmits existing-call terminal & media notification data to a second real terminal device included in a second terminal group. The second real terminal device clearly shows a user at the transfer destination the difference between media available in the second terminal group and the media involved in the existing call, and accepts from the user a designation of media to be employed in a transferred call. The call control server establishes a connection between a third real terminal device included in a third terminal group and a real terminal device included in the second terminal group, as the transferred call, in accordance with the designated media.

## Description

### BACKGROUND

### 1. Field

The present invention relates to a communication control system arranged to connect virtual terminal devices to one another, where each of the virtual terminal devices is associated with a plurality of real terminal devices to which sessions involving a plurality of types of media are assigned.

### 2. Description of the Related Art

There are diversified styles of communications due to existence of mobile phones, facsimiles, personal computers (PCs), etc. that are provided with the Voice over Internet Protocol (VoIP) function over the wireless local area network. Further, it has become easier to communicate in a session involving a plurality of types of media due to the advance of IP (Internet Protocol) technologies. For example, users can arbitrarily communicate with each other in different communication forms in combination with a plurality of types of media.

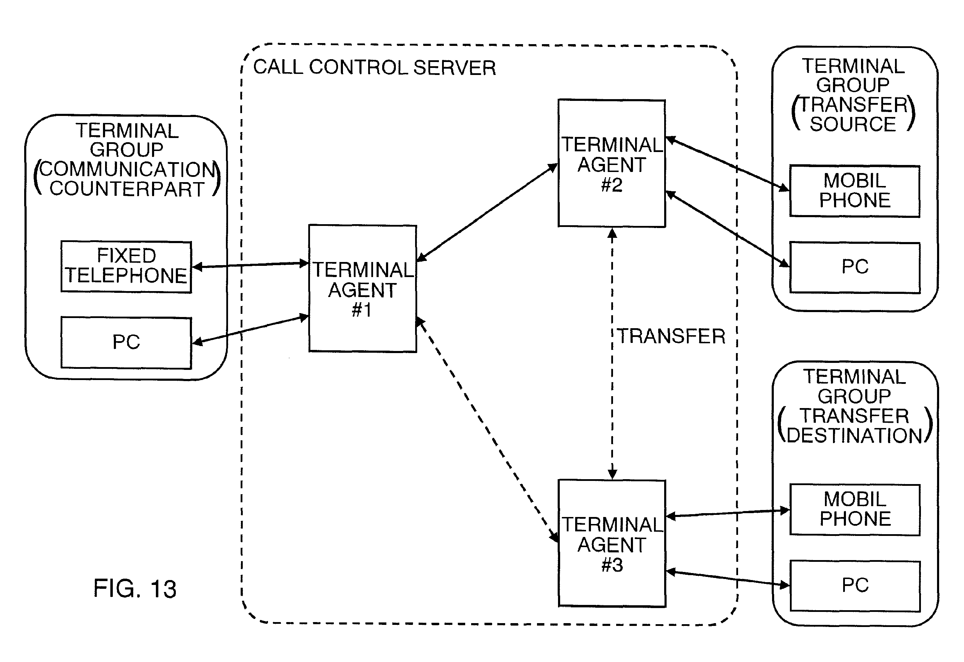

Subsequently, there have been proposed communication control methods which allow for the above described communications. According to one of the communication control methods, for example, a call control server teams real terminal devices employed in different communication forms so that a single virtual terminal device (terminal agent) is formed, as discussed in Japanese Laid-open Patent Publication No. 2006-270837. Fig. 13 is a schematic diagram illustrating a configuration of an entire system employed in performing a conventional communication control method. According to a method discussed in Japanese Laid-open Patent Publication No. 2006-270837, for example, each real terminal device is associated with terminal agents #1, #2, or #3, in the call control server. The terminal agents #1 to #3 communicate with one another so that communications in different communication forms can be performed (see Fig. 13). Further, by transferring a call, a connection established between the terminal agents #1 and #2 may be shifted to a connection established between the terminal agents #1 and #3. For example, a communication received by one department of a company may be transferred to another department of the same company.

According to the technology discussed in Japanese Laid-open Patent Publication No. 2006-270837, however, a session is disconnected when transferring a call from a transfer source to a transfer destination on selecting media to be employed in the transferred call, so that the communication is suspended.

Further, for example, when an existing call involving video media is transferred to a transfer destination employing audio media, the video media is suddenly disconnected and shifted to the audio media in a terminal device of the communication counterpart due to the transfer. Thus, the communication counterpart suffers from the shift to unexpected media.

### SLTMMARY

According to an aspect of the present invention, there is provided a communication control system including a plurality of terminal groups and a call control server. Each of the terminal group is capable of communicating with media of at least one type. Each of the terminal groups includes at least one terminal device capable of communicating with media of at least one type. The call control server controls communications between the terminal groups by controlling communications between terminal agents created in the call control server. Each terminal agent is respectively associated with a corresponding one of the terminal groups. The call control server includes a terminal agent manager, a call controller, a transfer controller, an existing-call media notifier, a transferred-call media setter, and a transferred-call connecter. The terminal agent manager creates and manages the terminal agents. The call controller establishes a connection, as an existing call, between a first terminal agent and a second terminal agent. The transfer controller receives a request for call transfer from a second terminal group via the second terminal agent. The existing-call media notifier notifies a first type of media involved in the existing call to a third terminal agent. The transferred-call media setter stores data on a second type of media to be employed in a transferred call. The second type of media is determined on the basis of the first type of media and types of media available in a third terminal group. The transferred-call connecter establishes a connection with media conforming to the second type of media, as a transferred call, between the first terminal agent and the third terminal agent.

The transferred-call media setter of the call control server may notify the second type of media to a first terminal device via the first terminal agent.

The transferred-call media setter may store data on a first terminal device included among the third terminal group, for employing media of the second type.

The second type of media may be determined in accordance with a predefined policy prescribing media to be employed in a transferred call.

The transferred-call connecter may continue a session involving a shared terminal device included in the second terminal group, wherein the shared terminal device is also included in the third terminal group.

### BRIEF DESCRIPTION OF THE DRAWINGS

Fig. 1 is a schematic diagram illustrating an entire configuration of a communication control system according to embodiments of the present invention;
Fig. 2 is a block diagram illustrating a configuration of an information processing apparatus according to embodiments of the present invention;
Figs. 3A, 3B, 3C, and 3D are schematic diagrams illustrating examples of data used in embodiments of the present invention;
Fig. 4 is a schematic diagram illustrating a communication control method according to a first embodiment of the present invention;
Figs. 5A and 5B are schematic diagrams illustrating examples of display screen image according to a first embodiment of the present invention;
Fig. 6 is a flowchart illustrating processing procedures for communication control according to a first embodiment of the present invention;
Fig. 7 is a flowchart illustrating processing procedures for mediation according to a first embodiment of the present invention;
Fig. 8 is a schematic diagram illustrating a communication control method according to a second embodiment of the present invention;
Fig. 9 is a flowchart illustrating processing procedures for communication control according to a second embodiment of the present invention;
Fig. 10 is a schematic diagram illustrating a communication control method according to a third embodiment of the present invention;
Figs. 11A, 11B, and 11C are schematic diagrams illustrating examples of data used in a third embodiment of the present invention;
Fig. 12 is a flowchart illustrating processing procedures for communication control according to a third embodiment of the present invention; and
Fig. 13 is a schematic diagram illustrating a configuration of an entire system employed in performing a conventional communication control method;

### DESCRIPTION OF THE PREFERRED EMBODIMENTS

Hereinafter, communication control systems according to embodiments of the present invention will be described with reference to the attached drawings illustrating the embodiments.

The communication control systems according to embodiments of the present invention are configured to notify the type of media involved in the existing call to the terminal group at the transfer destination and determine media to be employed in the transferred call on the basis of relationship between the notified media type and the types of media available at the transfer destination. Subsequently, transfer operation may be performed smoothly without a sudden disconnection or a shift to unexpected media.

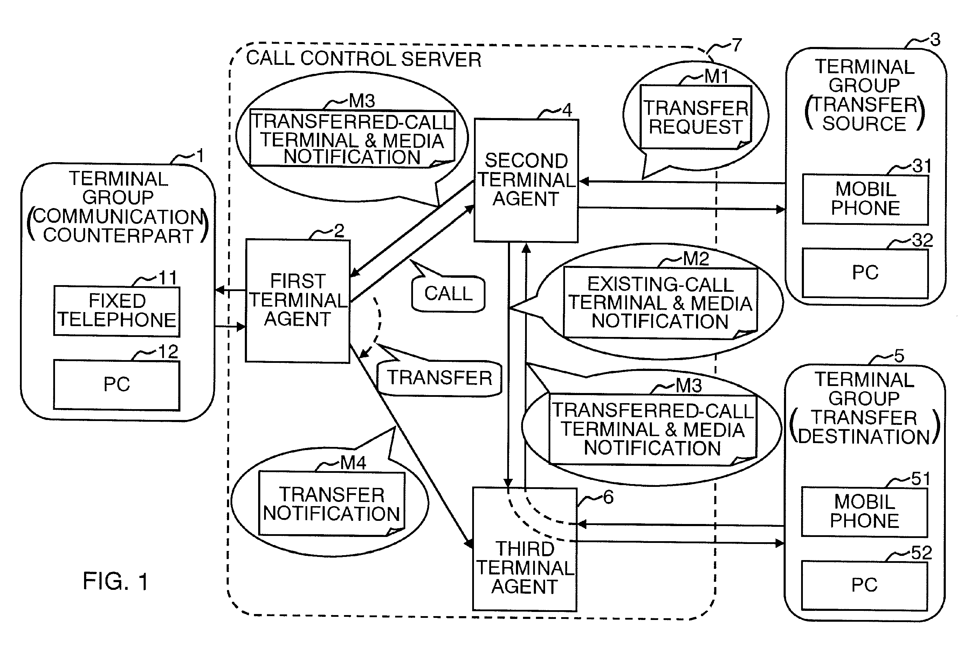

Fig. 1 is a schematic diagram illustrating an entire configuration of a communication control system according to embodiments of the present invention. As shown in Fig. 1, the communication control system includes terminal groups 1, 3, and 5, and a call control server 7.

Each of the terminal groups 1, 3, and 5 includes various types of terminal devices such as a fixed telephone, a mobile phone, a PC, a facsimile, etc. Each of the terminal groups 1, 3, and 5 may employ a plurality of types of media including audio, video, still image, moving picture, text, etc. In this description, the expression "terminal group 1" may also denote any of the real terminal devices included in the terminal group 1, the same holds for "terminal group 3" and "terminal group 5". The terminal devices included in each of the terminal groups 1, 3, and 5 are associated with a terminal agent in the call control server 7. As shown in Fig. 1, for example, a fixed telephone 11 and a PC 12 are associated with a first terminal agent 2 for an communication counterpart, a mobile phone 31 and a PC 32 are associated with a second terminal agent 4 for a transfer source, and a mobile phone 51 and a PC 52 are associated with a third terminal agent 6 for a transfer destination, in the embodiments. That is to say, each of the first terminal agent 2, the second terminal agent 4, and the third terminal agent 6 does not physically exist in the system, but is virtually created in the call control server 7. Although the terminal agents 2, 4, and 6 in the example shown in Fig. 1 are created in the same call control server, these terminal agents may be created in separate call control servers.

The following processing procedures are performed in the communication control system according to the embodiments. The call control server 7 establishes a connection between the first terminal agent 2 and the second terminal agent 4, as an existing call.

During communications in the existing call, the terminal group 3 associated with the second terminal agent 4 is acceptable of an input of transfer request data M1. The transfer request data M1 includes a call ID identifiable of the existing call, a terminal ID identifiable of a terminal device of the communication counterpart, and a terminal ID identifiable of a terminal device provided at the transfer destination, which are associated with one another.

When the terminal group 3 has accepted the transfer request data M1, the call control server 7 receives the transfer request data M1 via the second terminal agent 4. Upon receiving the transfer request data M1, the call control server 7 transmits existing-call terminal & media notification data M2 to the terminal group 5 via the third terminal agent 6. The existing-call terminal & media notification data M2 includes data on the capacity of the communication counterpart and existing-call terminal & media data 73c (described later) for clarification on the difference of conditions relating to media.

Upon receiving the existing-call terminal & media notification data M2, the terminal group 5 selects media available in common both in the communication counterpart and in the terminal group 5. The terminal group 5 displays the selected media. Thus, the terminal group 5 clearly shows a user at the transfer destination the difference between the media available in the terminal group 5 and the media involved in the existing call. Then, the terminal group 5 accepts designation of media to be employed in a transferred call, which is inputted by the user at the transfer destination.

When the terminal group 5 has accepted the designation of media to be employed, the call control server 7 receives data on the designation of media via the third terminal agent 6. Upon receiving the data on the designation of media, the call control server 7 transmits transferred-call terminal & media notification data M3 to the terminal group 1 via the first terminal agent 2. The transferred-call terminal & media notification data M3 is feedback of data designated at the transfer destination and is identified with a transfer notification call ID. The transferred-call terminal & media notification data M3 includes a media ID identifiable of media to be employed in the transferred call and a terminal ID identifiable of a terminal device, each of which is associated with the transfer notification call ID.

Upon receiving the transferred-call terminal & media notification data M3, the terminal group 1 clearly shows a user at the communication counterpart the difference between the media involved in the existing call and the media to be employed in the transferred call. Then, the terminal group 1 accepts confirmation of the media to be employed in the transferred call, which is inputted by the user at the communication counterpart.

When the terminal group 1 has accepted the confirmation of the media to be employed, the call control server 7 receives data on the confirmation via the first terminal agent 2. Upon receiving the data on the confirmation, the call control server 7 transmits transfer notification data M4 to the terminal group 5 via the third terminal agent 6. The transfer notification data M4 includes a transfer notification call ID identifiable of a transfer notification call and a media ID identifiable of the employed media, which are associated with one another.

When the terminal group 5 has received the transfer notification data M4, the call control server 7 receives an acknowledgment via the third terminal agent 6. Upon receiving the acknowledgment, the call control server 7 establishes a connection between the terminal group 1 and the terminal group 5, as a transferred call, in accordance with the designation of media to be employed.

Thus, a shift is made from the existing call to the transferred call in the communication control system according to embodiments of the present invention.

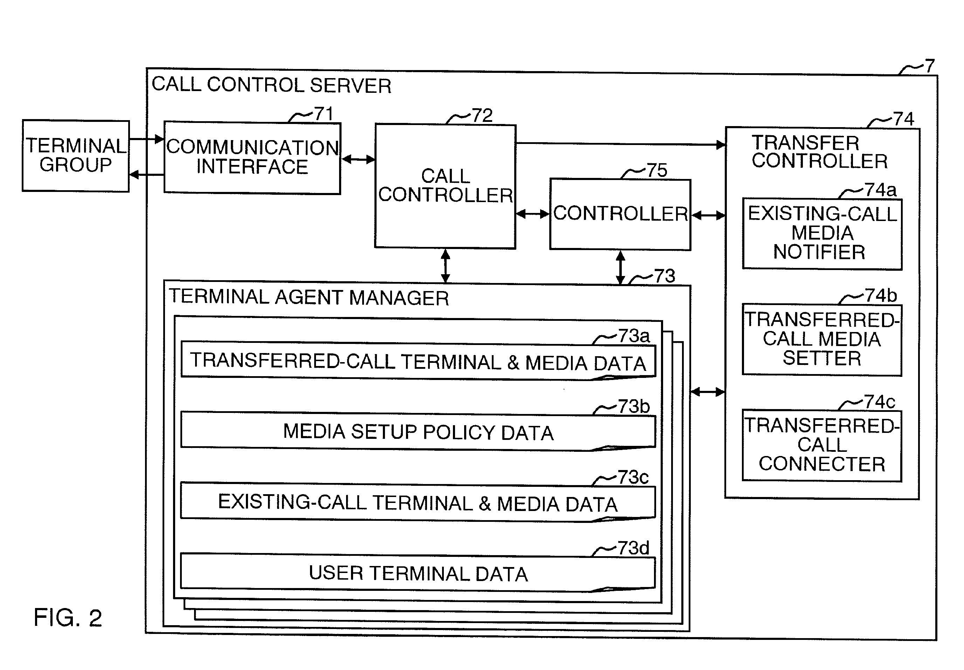

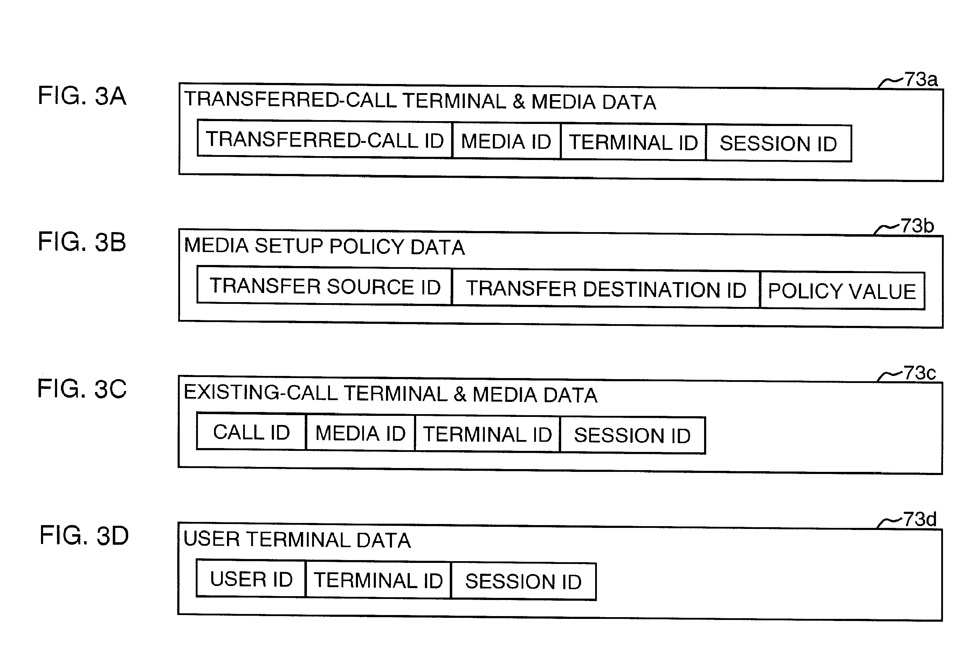

Next, the configuration and operations of the call control server 7 will be described. The call control server 7 is an information processing apparatus. Fig. 2 is a block diagram illustrating a configuration of an information processing apparatus according to embodiments of the present invention. Figs. 3A, 3B, 3C, and 3D are schematic diagrams illustrating examples of data used in embodiments of the present invention.

The call control server 7 includes a communication interface 71, a call controller 72, a terminal agent manager 73, a transfer controller 74, and a controller 75. The above described pieces of hardware are in communication with one another through a bus (not shown).

The communication interface 71 is a terminator of a communication network including, for example, the Internet and/or an intranet. Namely, the communication interface 71 is a contact point for communications with the real terminal devices. The communication interface 71 receives, for example, a request and/or notification transmitted from a real terminal device and transmits the request and/or notification to the call controller 72. Otherwise, the communication interface 71 transmits, for example, a request and/or notification generated in the call control server 7 to a real terminal device.

The call controller 72 performs control, so as to connect and/or disconnect a session between the real terminal devices. Upon receiving a request and/or notification via the communication interface 71, the call controller 72 transmits the request and/or notification to the terminal agent manager 73 and/or the transfer controller 74. The call controller 72 also transmits a request and/or notification generated by the terminal agent manager 73 and/or the transfer controller 74 to a real terminal device via the communication interface 71.

The terminal agent manager 73 manages sessions involving a plurality of types of media so that a plurality of terminal devices are associated with a single terminal agent. The terminal agents are created and managed by the terminal agent manager 73. The terminal agent manager 73 stores information about the status of media involved in the existing call and stores transferred-call terminal & media data 73a conveyed through the transfer notification call. The transferred-call terminal & media data 73a is data for determining a terminal device and media to be employed in the transferred call, and is identified with a transfer notification call ID. The transferred-call terminal & media data 73a includes a media ID identifiable of media available at the transfer destination, a terminal ID identifiable of a terminal device, and a session ID identifiable of a session, each of which is associated with the transfer notification call ID (see Fig. 3A).

The terminal agent manager 73 may automatically determine media to be employed in the transferred call in accordance with media setup policy data 73b. The media setup policy data 73b is set in advance by the terminal group 5 and stored in the terminal agent manager 73. The media setup policy data 73b includes terminal IDs identifiable of terminal devices provided at the transfer source, terminal IDs identifiable of terminal devices provided at the transfer destination, and a policy value to be set, which are associated with one another (see Fig. 3B). The policy value includes a value indicating a setup of employing the same media as that employed in the existing call, a value indicating a setup of employing media available for a transferred call in the maximum capacity, a value indicating a setup of employing media available for a transferred call in the minimum capacity, etc.

The terminal agent manager 73 manages the status of the session including the terminal device and media involved in the existing call on the basis of the existing-call terminal & media data 73c. The existing-call terminal & media data 73c is identified with a call ID. The existing-call terminal & media data 73c includes a media ID identifiable of the media involved in the existing call, a terminal ID identifiable of the terminal device, and a session ID identifiable of the session, each of which is associated with the call ID (see Fig. 3C).

The terminal agent manager 73 manages a session and a terminal device involved in the session on the basis of user terminal data 73d. The user terminal data 73d is identified with a user ID. The user terminal data 73d includes a terminal ID identifiable of the involved terminal device and a session ID identifiable of the session, each of which is associated with the user ID (see Fig. 3D).

The terminal agent manager 73 may store initial setup data in advance and may determine media to be employed in the transferred call on the basis of the initial setup data.

The transfer controller 74 includes an existing-call media notifier 74a, a transferred-call media setter 74b, and a transferred-call connector 74c. The transfer controller 74 performs processing for transfer control, including processing of sorting the received notification data in accordance with their types.

Upon receiving the transfer request data M1, the existing-call media notifier 74a extracts data on the media involved in the existing call in accordance with the existing-call terminal & media data 73c stored in the terminal agent manager 73 and transmits existing-call terminal & media notification data M2 including the extracted data on the involved media to a terminal group 5 provided at the transfer destination.

Upon receiving the transferred-call terminal & media notification data M3, the transferred-call media setter 74b stores the transferred-call terminal & media notification data M3 and transmits the transferred-call terminal & media notification data M3 to the terminal group 1.

Upon receiving the transfer notification data M4, the transferred-call connector 74c determines the media and terminal device to be employed in the transferred call on the basis of the transferred-call terminal & media data 73a stored in the terminal agent manager 73 and starts establishing a connection for the transferred call.

The controller 75 controls operations of each of the pieces of hardware in the call control server 7.

### First Embodiment

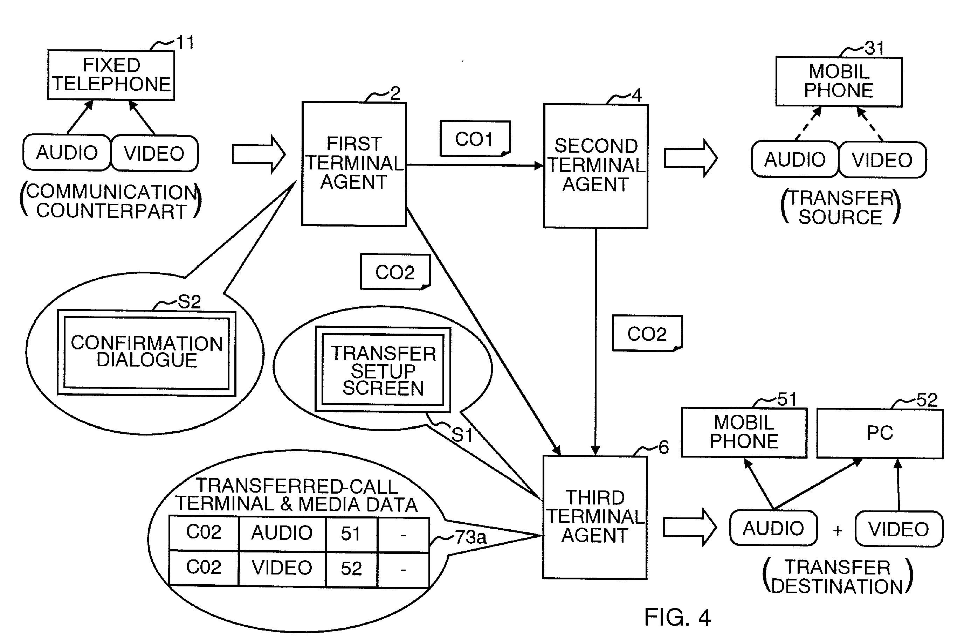

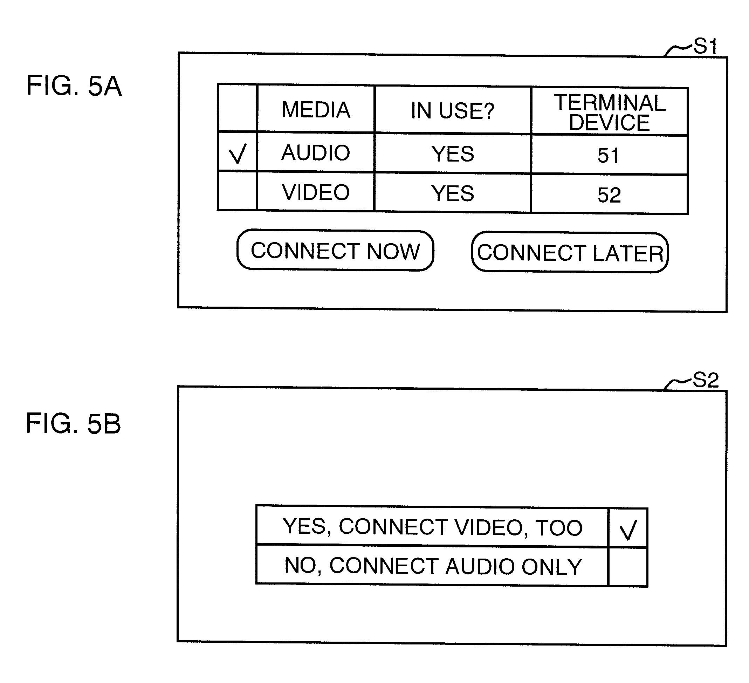

A communication control method according to a first embodiment of the present invention will be described. Fig. 4 is a schematic diagram illustrating a communication control method according to a first embodiment of the present invention. Figs. 5A and 5B are schematic diagrams illustrating examples of display screen image according to a first embodiment of the present invention.

First, the call control server 7 establishes a connection between the fixed telephone 11 (or the PC 12) and the mobile phone 31 for an existing call (C01) via the first terminal agent 2 and the second terminal agent 4. Suppose that the media including audio and video is involved in the connection for the existing call (C01).

When the mobile phone 31 has accepted an input of the transfer request data M1, the call control server 7 receives the transfer request data M1 via the second terminal agent 4. Upon receiving the transfer request data M1, the call control server 7 controls communications performed in a transfer notification call (C02) between the mobile phone 31 and the PC 52 via the second terminal agent 4 and the third terminal agent 6.

Suppose that the PC 52 is set to be connected with audio alone in the initial setup. Here, the PC 52 displays a transfer setup screen image S 1 on a monitor (not shown). The transfer setup screen image S1 includes a checkbox for selection of the type of media and terminal device to be employed in the transferred call. Upon marking the checkbox, the designation of media to be employed in the transferred call is accepted (see Fig. 5A). The PC 52 accepts, for example, a request to add video, as to the media to be employed.

The call control server 7 generates the transferred-call terminal & media data 73a in accordance with the request accepted by the PC 52. The call control server 7 transmits transfer notification data M4 including "C02" as the transfer notification call ID to the terminal group 5 via the third terminal agent 6. The call control server 7 controls communications performed in the transferred call (C02) between the fixed telephone 11 and the PC 52 via the first terminal agent 2 and the third terminal agent 6 in accordance with the transferred-call terminal & media data 73a. The call control server 7 disconnects communications performed in the existing call (C01) between the fixed telephone 11 and the mobile phone 31.

As a result, setup of the PC 52 is changed to make communications with not only audio but also video from the start of the connection. Therefore, the fixed telephone 11 can perform communications with the same media as that involved before the transfer is performed, without shifting to unexpected media.

Another example is that, the fixed telephone 11 and the mobile phone 31 are in communication with one another with audio alone in the existing call (C01). When the mobile phone 31 has accepted the transfer request data M1, the call control server 7 controls communications performed in the transferred call (C02) between the fixed telephone 11 and the PC 52.

Suppose that the PC 52 is set to be connected with audio and video in the initial setup. The call control server 7 generates the transferred-call terminal & media data 73a in accordance with the initial setup data. The call control server 7 disconnects the communications performed in the existing call (C01) between the fixed telephone 11 and the mobile phone 31. The fixed telephone 11 displays a confirmation dialog image S2 on a monitor (not shown). The confirmation dialog image S2 includes a checkbox for confirming the type of media and terminal device to be employed in the transferred call. Upon marking the checkbox, the confirmation of the media to be employed in the transferred call is accepted (see Fig. 5B).

The call control server 7 controls the communications performed in the transferred call (C02) between the fixed telephone 11 and the PC 52 via the first terminal agent 2 and the third terminal agent 6 in accordance with the confirmation accepted by the fixed telephone 11.

The fixed telephone 11, performing communications with audio alone at the beginning, can perform communications without shifting to unexpected media, since the fixed telephone 11 confirms the media to be employed through the confirmation dialog.

Yet another example is that, the fixed telephone 11 and the mobile phone 31 are in communication with one another with audio and video in the existing call (C01). When the mobile phone 31 has accepted the transfer request data M1, the call control server 7 controls communications performed in the transfer notification call (C02) between the mobile phone 31 and the PC 52 via the second terminal agent 4 and the third terminal agent 6.

Suppose that the PC 52 is set to be connected with audio alone in the initial setup. The PC 52 displays the transfer setup screen image S1 on a monitor (not shown). The PC 52 accepts a request, on the media to be employed, to connect the PC 52 with video, and the mobile phone 51 with audio, for example (see Fig. 5A).

The call control server 7 generates the transferred-call terminal & media data 73a in accordance with the request accepted by the PC 52. The call control server 7 transmits transfer notification data M4 including "C02" as the transfer notification call ID to the terminal group 5 via the third terminal agent 6. The call control server 7 controls communications performed in the transferred call (C02) between the fixed telephone 11 and the PC 52 via the first terminal agent 2 and the third terminal agent 6 in accordance with the transferred-call terminal & media data 73a. The call control server 7 disconnects communications performed in the existing call (C01) between the fixed telephone 11 and the mobile phone 31.

As a result, the fixed telephone 11 can perform communications with the same media as that involved before the transfer is performed, without shifting to unexpected media. An arbitrary terminal device may be assigned for the media at the transfer destination.

According to the first embodiment of the present invention, since the media to be employed in a transferred call is determined at the transfer destination by referring to the type of media involved in the existing call, the user at the transfer destination can perform communications with an appropriate communication apparatus for the determined media, which allows the user at the transfer destination to perform stress-free communications.

According to the first embodiment of the present invention, since the communication counterpart is notified beforehand of the type of media to be employed in the transferred call, the communication counterpart may not suffer from the shift to unexpected media due to the transfer, which allows the user at the communication counterpart to perform stress-free communications.

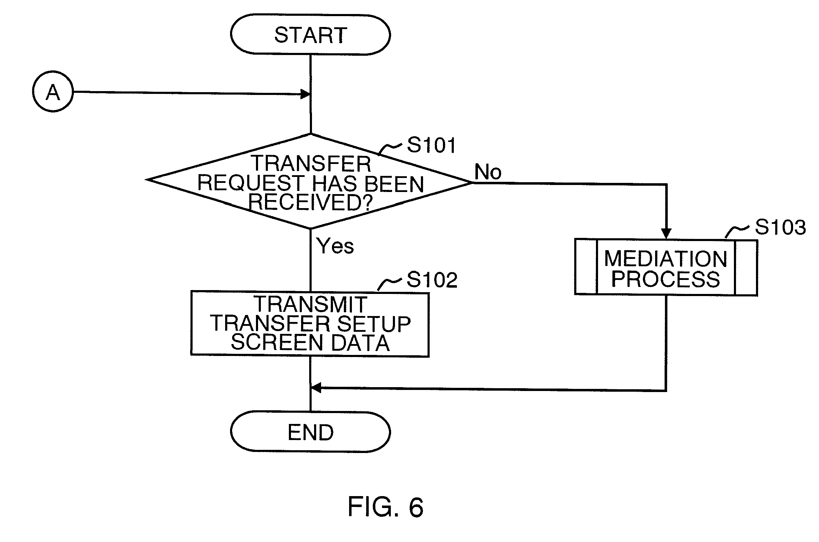

Next, the processing procedures for communication control performed by the call control server 7 according to the first embodiment will be described. Fig. 6 is a flowchart illustrating processing procedures for communication control according to a first embodiment of the present invention. The controller 75 of the call control server 7 determines whether or not the transfer request data M1 has been received (in operation S101). If it is determined that the transfer request data M1 has been received ("Yes" in operation S101), the controller 75 transmits data on the transfer setup screen image S1 to the terminal group 5 via the third terminal agent 6 (in operation S102), and the communication control process finishes.

On the other hand, if it is determined that the transfer request data M1 has not been received ("No" in operation S101), the controller 75 performs the mediation process (in operation S103).

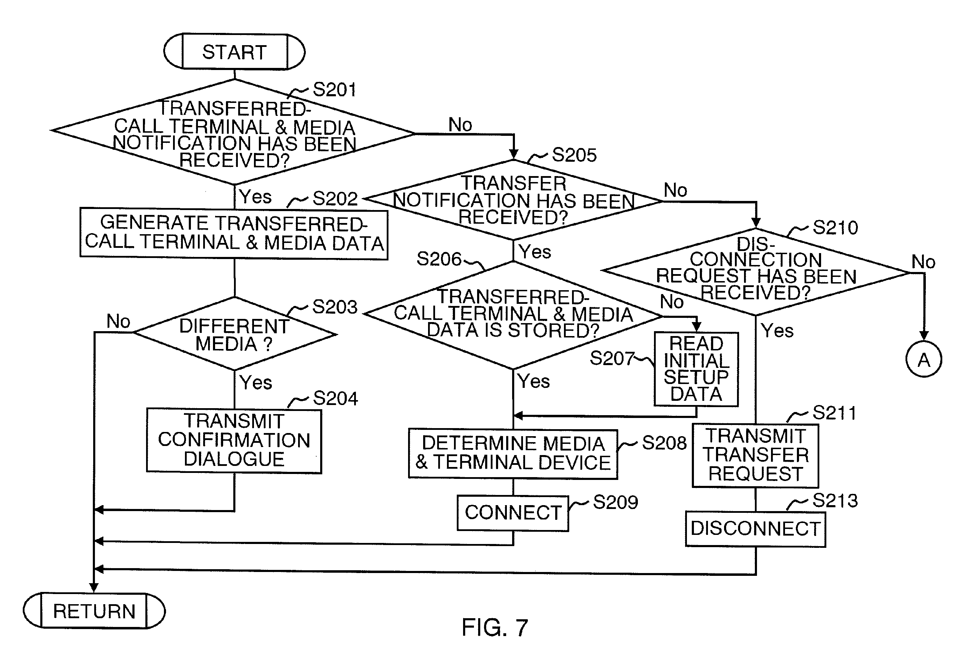

Here, the processing procedures for mediation performed by the call control server 7 will be described. Fig. 7 is a flowchart illustrating processing procedures for mediation according to a first embodiment of the present invention. The controller 75 of the call control server 7 determines whether or not the transferred-call terminal & media notification data M3 has been received (in operation S201). If it is determined that the transferred-call terminal & media notification data M3 has been received ("Yes" in operation S201), the controller 75 generates the transferred-call terminal & media data 73a in accordance with the received transferred-call terminal & media notification data M3 (in operation S202), and the terminal agent manager 73 stores the generated transferred-call terminal & media data 73a. The controller 75 determines whether or not there is a difference between the media to be employed in the transferred call and the media involved in the existing call (in operation S203). If it is determined that there is no difference ("No" in operation S203), the mediation process finishes without change of media involved in the existing call.

If it is determined that there is a difference ("Yes" in operation S203), the controller 75 transmits data on a confirmation dialog image to the terminal group 1 via the first terminal agent 2 (in operation S204), and the mediation process finishes.

On the other hand, if it is determined that the transferred-call terminal & media notification data M3 has not been received ("No" in operation S201), the controller 75 determines whether or not the transfer notification data M4 has been received (in operation S205). If it is determined that the transfer notification data M4 has been received ("Yes" in operation S205), the controller 75 determines whether or not the transferred-call terminal & media data 73a is stored in the terminal agent manager 73 (in operation S206). If it is determined that the transferred-call terminal & media data 73a is stored in the terminal agent manager 73 ("Yes" in operation S206), the controller 75 determines the media and terminal device to be employed in the transferred call in accordance with the transferred-call terminal & media data 73a stored in the terminal agent manager 73 (in operation S208).

The controller 75 establishes a connection with the determined media and terminal device (in operation S209), and the mediation process finishes.

If it is determined that the transferred-call terminal & media data 73a is not stored in the terminal agent manager 73 ("No" in operation S206), the controller 75 reads the initial setup data stored in advance in the terminal agent manager 73 (in operation S207), and determines the media and terminal device to be employed in the transferred call in accordance with the read initial setup data (in operation S208). The controller 75 establishes a connection with the determined media and terminal device (in operation S209), and the mediation process finishes.

On the other hand, if it is determined that the transfer notification data M4 has not been received ("No" in operation S205), it is determined whether or not disconnection request data has been received (in operation S210). If it is determined that the disconnection request data has not been received ("No" in operation S210), the communication control process returns to operation S101 to repeat.

If it is determined that the disconnection request data has been received ("Yes" in operation S210), the controller 75 transmits the transfer request data M1 to the terminal group 1 via the first terminal agent 2 (in operation S211). The controller 75 disconnects the communications performed between the terminal group 1 and the terminal group 3 (in operation S213), and the mediation process finishes.

### Second Embodiment

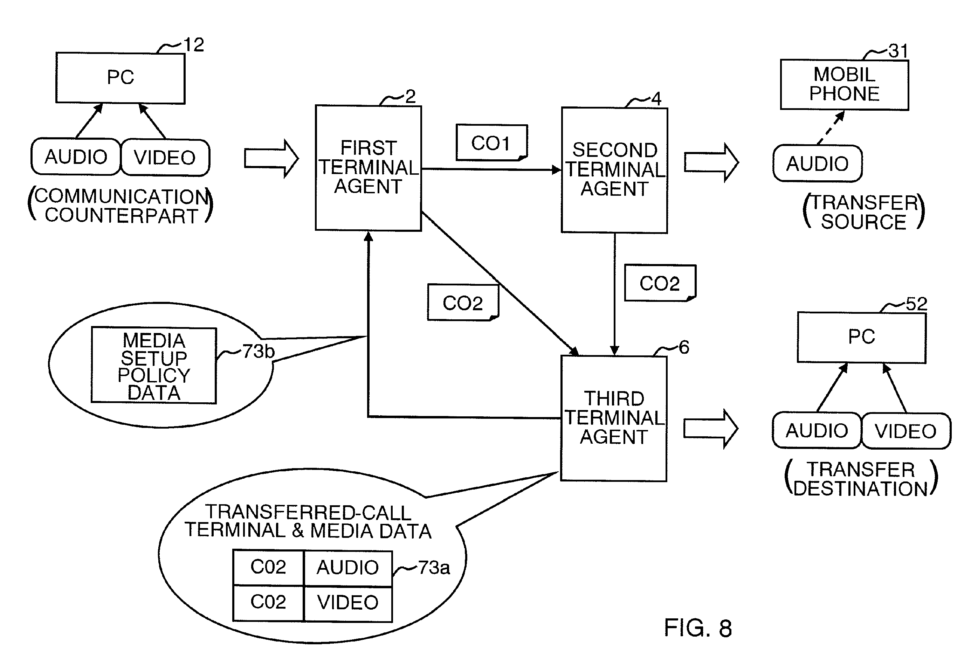

According to the above described first embodiment, the media and terminal device to be employed in the transferred call are determined in the terminal group 1 or the terminal group 5. However, embodiments of the present invention are not limited to this arrangement, but the media to be employed in the transferred call may be determined in advance. In a second embodiment of the present invention, an example will be described where the media to be employed in the transferred call is determined in advance and the media transfer is automatically performed if the determined media agrees with the media involved in the existing call. Fig. 8 is a schematic diagram illustrating a communication control method according to a second embodiment of the present invention.

The call control server 7 controls communications performed in the existing call (C01) between the PC 12 and the mobile phone 31 via the first terminal agent 2 and the second terminal agent 4. Suppose that the media including audio and video is involved in the connection for the existing call (C01).

When the mobile phone 31 has accepted the transfer request data M1, the call control server 7 receives the transfer request data M1 via the second terminal agent 4. Upon receiving the transfer request data M1, the call control server 7 controls communications performed in the transfer notification call (C02) between the mobile phone 31 and the PC 52 via the second terminal agent 4 and the third terminal agent 6. The call control server 7 compares the media setup policy data 73b which is set in advance by the PC 52 with the existing-call terminal & media data 73c, and determines the media provided in common both in the terminal group 1 and in the terminal group 5.

For example, if it is specified that "Audio and video are to be employed in PC communications" in the media setup policy data 73b, the call control server 7 determines the common media to be "audio and video for PC" and generates the transferred-call terminal & media data 73a. The call control server 7 disconnects the communications performed in the existing call (C01) between the PC 12 and the mobile phone 31, and transmits transfer notification data M4 including "C02" as the transfer notification call ID to the PC 52 via the third terminal agent 6. The call control server 7 controls communications performed in the transferred call (C02) between the PC 12 and the PC 52 via the first terminal agent 2 and the third terminal agent 6 in accordance with the transferred-call terminal & media data 73a.

As a result, the PC 12 can perform communications with the same media as that involved before the transfer is performed, without shifting to unexpected media. The user of the PC 12 and/or the user at the transfer destination may not be required to perform any operation.

According to the second embodiment of the present invention, since the media setup policy data is set in advance and the media to be employed in the transferred call is determined in accordance with the media setup policy, the user at the transfer destination may not perform operations to make media setup, which allows the user at the transfer destination to perform stress-free and smooth communications.

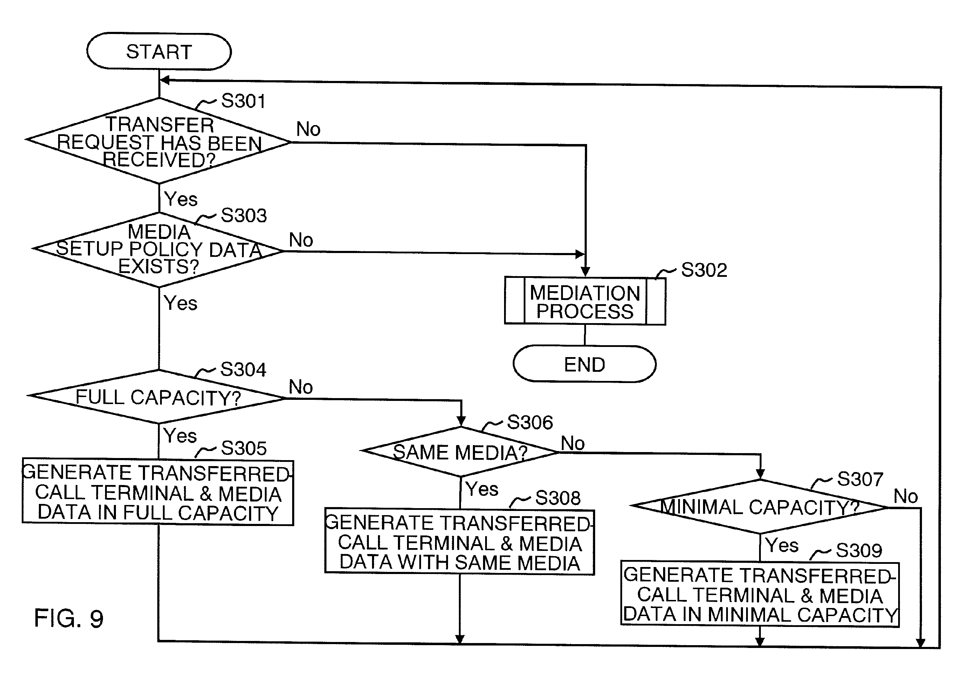

Next, processing procedures for communication control performed by the call control server 7 according to the second embodiment will be described. Fig. 9 is a flowchart illustrating processing procedures for communication control according to a second embodiment of the present invention. The controller 75 of the call control server 7 determines whether or not the transfer request data M1 has been received (in operation S301). If it is determined that the transfer request data M1 has not been received ("No" in operation S301), the controller 75 perform the mediation process (in operation S302), and the communication control process finishes. Since the processing procedures for mediation are the same as those performed in the first embodiment, the description thereof is omitted.

If it is determined that the transfer request data M1 has been received ("Yes" in operation S301), the controller 75 determines whether or not the media setup policy data 73b exists in the terminal agent manager 73 (in operation S303). If it is determined that the media setup policy data 73b does not exist in the terminal agent manager 73 ("No" in operation S303), the controller 75 performs the mediation process (in operation S302), and the communication control process finishes. Since the processing procedures for mediation are the same as those performed in the first embodiment, the description thereof is omitted.

If it is determined that the media setup policy data 73b exists in the terminal agent manager 73 ("Yes" in operation S303), the controller 75 determines whether or not the policy value included in the media setup policy data 73b indicates the maximum capacity (in operation S304). If it is determined that the policy value indicates the maximum capacity ("Yes" in operation S304), the controller 75 generates the transferred-call terminal & media data 73a indicating that the media should be employed in the maximum capacity (in operation S305), and the communication control process returns to operation S301 to repeat. The above described term "the maximum capacity" denotes, for example, to employ the maximum number of media provided in common both in the terminal group 1 and in the terminal group 5.

On the other hand, if it is determined that the policy value does not indicate the maximum capacity ("No" in operation S304), the controller 75 determines whether or not the policy value indicates that the same media as that involved in the existing call should be employed (in operation S306). If it is determined that the policy value indicates that the same media as that involved in the existing call should be employed ("Yes" in operation S306), the controller 75 generates the transferred-call terminal & media data 73a indicating that the media to be employed is the same as that involved in the existing call (in operation S308), and the communication control process returns to operation S301 to repeat.

On the other hand, if it is determined that the policy value does not indicate that the same media as that involved in the existing call should be employed ("No" in operation S306), the controller 75 determines whether or not the policy value indicates the minimum capacity (in operation S307). If it is determined that the policy value indicates the minimum capacity ("Yes" in operation S307), the controller 75 generates the transferred-call terminal & media data 73a indicating that the media should be employed in the minimum capacity (in operation S309), and the communication control process returns to operation S301 to repeat. The above described term "the minimum capacity" denotes, for example, to employ the minimum number of media, that is, any of the media provided in common both in the terminal group 1 and in the terminal group 5.

If it is determined that the policy value does not indicate the minimum capacity ("No" in operation S307), the communication control process returns to operation S301 to repeat.

### Third Embodiment

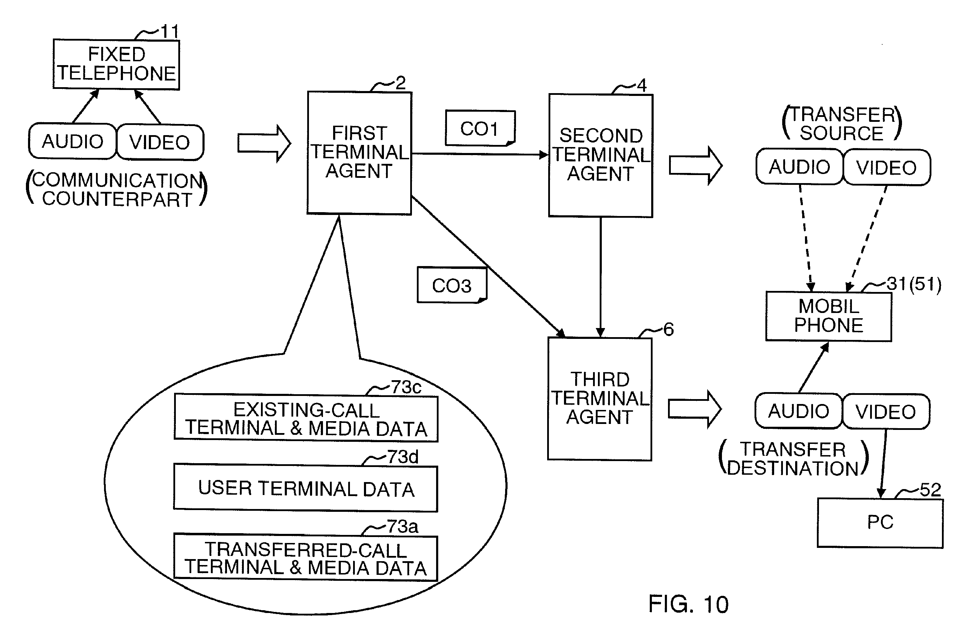

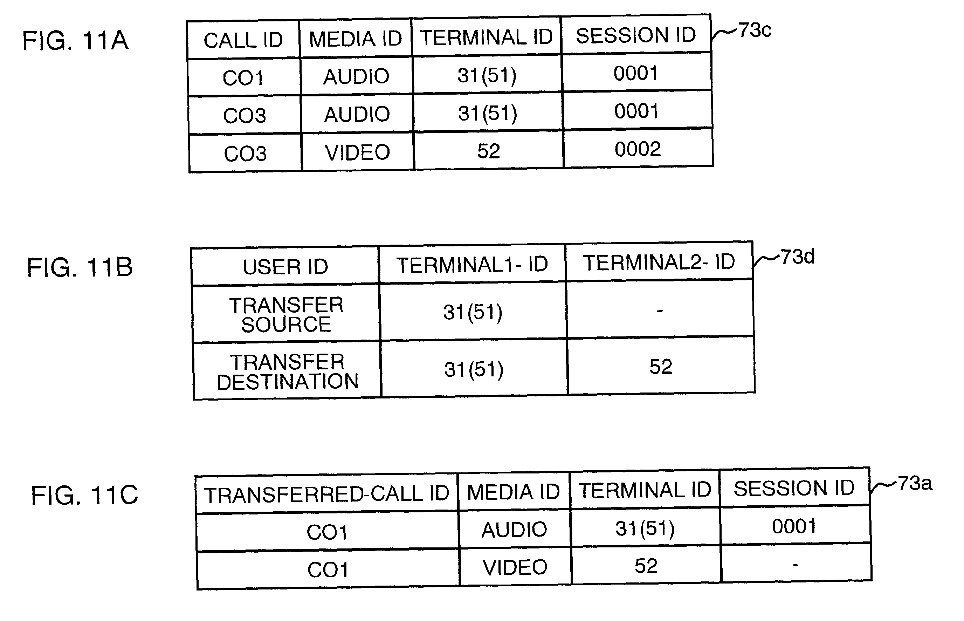

According to the above described embodiments, a real terminal device available at the transfer source and a real terminal device available at the transfer destination are separately registered. However, embodiments of the present invention are not limited to this arrangement, but the same real terminal device may be registered repeatedly as both the real terminal device available at the transfer source and the real terminal device available at the transfer destination. In a third embodiment of the present invention, an example will be described where a session of an existing call is shifted to a session of a transferred call within a real terminal device registered as both a real terminal device available at the transfer source and a real terminal device available at the transfer destination. Fig. 10 is a schematic diagram illustrating a communication control method according to a third embodiment of the present invention. Figs. 11A, 11B, and 11C are schematic diagrams illustrating examples of data used in a third embodiment of the present invention.

The call control server 7 controls communications performed in the existing call (C01) between the fixed telephone 11 and the mobile phone 31 (51) via the first terminal agent 2 and the second terminal agent 4. Suppose that the media including audio and video is involved in the connection for the existing call (C01).

When the mobile phone 31 (51) has accepted the transfer request data M1, the call control server 7 receives the transfer request data M1 via the second terminal agent 4. Upon receiving the transfer request data M1, the call control server 7 controls communications performed in the transfer notification call (C02) between the mobile phone 31 (51) and the PC 52 via the second terminal agent 4 and the third terminal agent 6. The call control server 7 compares the existing-call terminal & media data 73c with the user terminal data 73d, and extracts data on a shared terminal device which is the same terminal device employed at the transfer source and available at the transfer destination (see Figs. 11A and 11B).

For example, if the existing-call terminal & media data 73c includes data "terminal ID: 31 (51)" on the terminal device involved in the existing call, and the user terminal data 73d includes data "terminal ID: 31 (51)" on the terminal device available at the transfer source and data "terminal ID: 31 (51)" on the terminal device available at the transfer destination, the call control server 7 extracts the data "terminal ID: 31 (51)" on the shared terminal device.

As for terminal devices other than the shared terminal device, the call control server 7 extracts the maximum number of media available in common both in the terminal group 1 and in the terminal group 5 on the basis of the media setup policy data 73b determined in advance and the existing-call terminal & media data 73c (see Fig. 11A).

For example, if it is specified that "media should be employed in the maximum capacity" in the media setup policy data 73b, the call control server 7 determines that "video is to be employed in the terminal device with terminal ID: 52" and generates the transferred-call terminal & media data 73a in accordance with the determined data (see Fig. 11C). The call control server 7 transmits transfer notification data M4 including "C02" as the transfer notification call ID to the mobile phone 31 (51) and the PC 52 via the third terminal agent 6. The call control server 7 performs the audio transfer within the mobile phone 31 (51). On the other hand, the call control server 7 assigns video to the PC 52, and controls communications performed in the transferred call (C03) between the fixed telephone 11 and the PC 52.

As a result, even though the transfer process is performed, the session established between the fixed telephone 11 and the mobile phone 31 (51) may not be disconnected. At least, audio communications may not be suspended.

According to the third embodiment of the present invention, since the transferred call takes over the session established in the existing call, the communications may not be disconnected due to the transfer, which allows the user at the communication counterpart to perform stress-free and smooth communications.

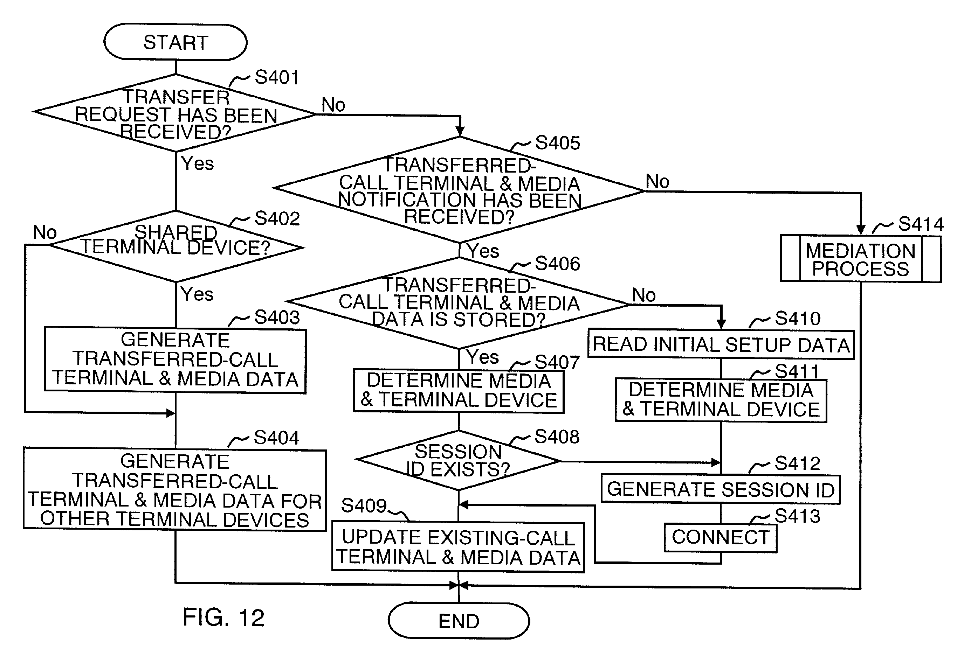

Next, processing procedures for communication control performed by the call control server 7 according to the third embodiment will be described. Fig. 12 is a flowchart illustrating processing procedures for communication control according to a third embodiment of the present invention. The controller 75 of the call control server 7 determines whether or not the transfer request data M1 has been received (in operation S401). If it is determined that the transfer request data M1 has been received ("Yes" in operation S401), the controller 75 compares the existing-call terminal & media data 73c stored in the terminal agent manager 73 with the user terminal data 73d stored in the terminal agent manager 73 and determines whether or not there is a shared terminal device which is the same terminal device employed at the transfer source and available at the transfer destination (in operation S402). If it is determined that there is the shared terminal device ("Yes" in operation S402), the call control server 7 extracts the terminal ID of the shared terminal device and the session ID from the existing-call terminal & media data 73c, and generates the transferred-call terminal & media data 73a in accordance with the extracted terminal ID and the session ID (in operation S403). The controller 75 generates the transferred-call terminal & media data 73a for other terminal devices (in operation S404), and the communication control process finishes. The generation of the transferred-call terminal & media data 73a for other terminal devices is performed on the basis of the media and terminal device determined in accordance with the above described first or second embodiment.

If it is determined that there is no shared terminal device which is the same terminal device employed at the transfer source and available at the transfer destination ("No" in operation S402), the call control server 7 generates the transferred-call terminal & media data 73a for other terminal devices (in operation S404), and the communication control process finishes.

If it is determined that the transfer request data M1 has not been received ("No" in operation S401), the call control server 7 determines whether or not the transferred-call terminal & media notification data M3 has been received (in operation S405). If it is determined that the transferred-call terminal & media notification data M3 has been received ("Yes" in operation S405), the controller 75 determines whether or not the transferred-call terminal & media data 73a is stored in the terminal agent manager 73 (in operation S406). If it is determined that the transferred-call terminal & media data 73a is stored in the terminal agent manager 73 ("Yes" in operation S406), the controller 75 determines the media and terminal device to be employed in the transferred call in accordance with the transferred-call terminal & media data 73a stored in the terminal agent manager 73 (in operation S407).

The controller 75 determines whether or not a session ID relating to the determined media and terminal device exists (in operation S408). If it is determined that the session ID exists ("Yes" in operation S408), the controller 75 updates the existing-call terminal & media data 73c stored in the terminal agent manager 73 on the basis of the existing session ID (in operation S409), and the communication control process finishes.

On the other hand, if it is determined that the transferred-call terminal & media data 73a is not stored in the terminal agent manager 73 ("No" in operation S406), the controller 75 receives the initial setup data stored in advance in the terminal agent manager 73 (in operation S410), and determines the media and terminal device to be employed in the transferred call in accordance with the read initial setup data (in operation S411). The controller 75 generates a session ID relating to the determined media and terminal device (in operation S412), and establishes a connection employing the determined media and terminal device (in operation S413). The controller 75 updates the transferred-call terminal & media data 73a stored in the terminal agent manager 73 in accordance with the determined media and terminal device (in operation S409), and the communication control process finishes.

If it is determined that the session ID does not exist ("No" in operation S408), the controller 75 generates a session ID relating to the determined media and terminal device (in operation S412), and establishes a connection employing the determined media and terminal device (in operation S413). The controller 75 updates the transferred-call terminal & media data 73a stored in the terminal agent manager 73 in accordance with the determined media and terminal device (in operation S409), and the communication control process finishes.

If it is determined that the transferred-call terminal & media notification data M3 has not been received ("No" in operation S405), the controller 75 performs the mediation process (in operation S414), and the communication control process finishes. Since the processing procedures for mediation are the same as those of the first embodiment, the description thereof is omitted.

The many features and advantages of the embodiments are apparent from the detailed specification and, thus, it is intended by the appended claims to cover all such features and advantages of the embodiments that fall within the true spirit and scope thereof. Further, since numerous modifications and changes will readily occur to those skilled in the art, it is not desired to limit the inventive embodiments to the exact construction and operation illustrated and described, and accordingly all suitable modifications and equivalents may be resorted to, falling within the scope thereof.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A communication control system, comprising:
terminal groups, each of said terminal groups being capable of communicating with media of at least one type, each of said terminal groups including at least one terminal device capable of communicating with media of at least one type; and
a call control server for controlling communications between the terminal groups by controlling communications between terminal agents created in said call control server, each of said terminal agents being respectively associated with a corresponding one of the terminal groups, said call control server including:
a terminal agent manager for creating and managing the terminal agents,
a call controller for establishing a connection, as an existing call, between a first terminal agent and a second terminal agent,
a transfer controller for receiving a request for call transfer from a second terminal group via the second terminal agent,
an existing-call media notifier for notifying a first type of media involved in the existing call to a third terminal agent,
a transferred-call media setter for storing data on a second type of media to be employed in a transferred call, said second type of media being determined on the basis of the first type of media and types of media available in a third terminal group, and
a transferred-call connecter for establishing a connection with media conforming to the second type of media, as a transferred call, between the first terminal agent and the third terminal agent.

2. The communication control system of claim 1, wherein
said transferred-call media setter notifies the second type of media to a first terminal device via the first terminal agent.

3. The communication control system of claim 1 or 2, wherein
said transferred-call media setter stores data on a first terminal device for employing media of the second type, said first terminal device being included among the third terminal group.

4. The communication control system of any preceding claim, wherein
said second type of media is determined in accordance with a predefined policy prescribing media to be employed in a transferred call.

5. The communication control system of any preceding claim, wherein
said transferred-call connecter continues a session involving a shared terminal device included in the second terminal group, said shared terminal device being also included in the third terminal group.

6. A call control server for controlling communications between terminal groups by controlling communications between terminal agents created in said call control server, each of said terminal groups being capable of communicating with media of at least one type, each of said terminal groups including at least one terminal device capable of communicating with media of at least one type, each of said terminal agents being respectively associated with a corresponding one of the terminal groups, said call control server comprising:
a terminal agent manager for creating and managing the terminal agents;
a call controller for establishing a connection, as an existing call, between a first terminal agent and a second terminal agent;
a transfer controller for receiving a request for call transfer from a second terminal group via the second terminal agent;
an existing-call media notifier for notifying a first type of media involved in the existing call to a third terminal agent;
a transferred-call media setter for storing data on a second type of media to be employed in a transferred call, said second type of media being determined on the basis of the first type of media and types of media available in a third terminal group; and
a transferred-call connecter for establishing a connection with media conforming to the second type of media, as a transferred call, between the first terminal agent and the third terminal agent.

7. A communication control method implemented by a call control server for controlling communications between terminal groups by controlling communications between terminal agents created in said call control server, each of said terminal groups being capable of communicating with media of at least one type, each of said terminal groups including at least one terminal device capable of communicating with media of at least one type, each of said terminal agents being respectively associated with a corresponding one of the terminal groups, said communication control method comprising:
creating the terminal agents;
establishing a connection, as an existing call, between a first terminal agent and a second terminal agent;
receiving a request for call transfer from a second terminal group via the second terminal agent;
notifying a first type of media involved in the existing call to a third terminal agent;
determining a second type of media to be employed in a transferred call on the basis of the first type of media and types of media available in a third terminal group;
storing data on the second type of media; and
establishing a connection with media conforming to the second type of media, as a transferred call, between the first terminal agent and the third terminal agent.
